# EUROPEAN PATENT SPECIFICATION

(11) **EP 4 196 885 B1**
(45) Date of publication and mention of the grant of the patent: **05.06.2024**
(21) Application number: 20767639.6
(22) Date of filing: 17.08.2020
(51) Int. Cl.: G06F 16/23, G06F 16/27, G06F 16/21

(54) **DELTA CLONE-BASED DATABASE UPGRADES**
DELTA-KLON BASIERTE DATENBANKAKTUALISIERUNGEN
MISES À NIVEAU DE BASES DE DONNÉES BASÉES SUR DES CLONES DELTA

(43) Date of publication of application: 21.06.2023
(73) Proprietor: Siemens Industry Software Inc., Plano, TX 75024-6612 (US)
(72) Inventor: KAISER, Reiner K., Redondo Beach, California 90278 (US); OUALI, Ahmed, Cambridge Cambridgeshire CB1 8DN (GB)
(74) Representative: Siemens Patent Attorneys
(86) International application number: PCT/US2020/046658
(87) International publication number: WO 2022/039714

(56) References cited:
- EP-A1- 2 175 365
- US-A1- 2016 098 443
- US-B2- 7 523 142

## Description

### BACKGROUND

Computer systems can be used to create, use, and manage data for products and other items. Computer-aided technology (CAx) systems, for instance, may be used to aid in the design, analysis, simulation, or manufacture of products. Examples of CAx systems include computer-aided design (CAD) systems, computer-aided engineering (CAE) systems, visualization and computer-aided manufacturing (CAM) systems, product data management (PDM) systems, product lifecycle management (PLM) systems, and more. These CAx systems may include components (e.g., CAx applications) that facilitate the design and simulated testing of product structures and product manufacturing. EP2175365 A1 discloses a zero downtime database upgrade using containers for recording and then applying changes.

### Summary

The object of the invention is solved by the features of the independent claims. Further embodiments are the subject-matter of the dependent claims.

### BRIEF DESCRIPTION OF THE DRAWINGS

Certain examples are described in the following detailed description and in reference to the drawings.
Figure 1 shows an example of a computing system that supports delta clone-based database upgrades.
Figure 2 shows an example generation of database clones to support delta clone-based database upgrades.
Figure 3 shows an example database upgrade to a production clone and tracking of changes to a production database through a delta clone.
Figure 4 shows an example of a database upgrade to a delta clone after the database upgrade to the production clone completes.
Figure 5 shows an example timeline for a database upgrade of a production database using a production clone and a delta clone.
Figure 6 shows an example of logic that a system may implement to support delta clone-based database upgrades.
Figure 7 shows an example of a computing system that supports delta clone-based database upgrades.

### DETAILED DESCRIPTION

Modern computing systems can store data of immense quantities and complexity. As one example, PDM systems may implement or require data storage systems with complex schema structures to represent business model instances with complex data interdependencies. PDM applications may require such complex data structuring to support various application functionalities. Application version upgrades or changes in application functionality may require changes to the underlying production data itself, relational data schemas, table interdependencies, data object class hierarchies, or various other database upgrades to the production data of such computing systems.

As such, database upgrades may invoke complex schema changes to support added business functionality or incorporate logical data model changes. As used herein, a "database upgrade" may refer to any change to a database or computing system to alter stored data, schemas, structures, relationships, or other logic of the database itself or stored data. Example database upgrades may range from low level schema changes (e.g., adding or removing database table columns) to complex upgrade logic that migrates object instances from one schema representation to another schema representation. Database upgrade processes may further include data verifications to confirm that executed database upgrades do not improperly corrupt stored data or otherwise impair or disrupt application functions that access stored data.

In some cases, database upgrades for PL or PDM applications may require multiple hours or days in order to fully execute and validate. For certain simple schema changes, it is possible to limit data authoring for specifically affected tables and object instances stored in these tables during a database upgrade. However, such simplistic strategies may not be scalable on modern database systems that implement intricate data dependencies and complex schema structures. Alternatively, wholesale restriction of user access to database systems during multi-day upgrade windows may be possible to ensure a proper database upgrade. Such restrictive mechanisms, however, can be inconvenient or overly violate application usage requirements or service level agreements. For modern cloud-based systems with high uptime and availability requirements, restricting access to application data for multiple hours or days is not practical or permitted in modern business contexts.

The disclosure herein may provide systems, methods, devices, and logic for delta clone-based database upgrades. As described in greater detail herein, various delta clone-based database upgrade features may support execution and validation of database upgrades for complex database systems with increased efficiency and reduced downtime. According to the present disclosure, database upgrades may be performed using both production clones and delta clones of production databases. Through a delta clone, database upgrades may be performed as a background process on the production clone while user access to the production database is maintained. Changes to the production database during an upgrade window may be pushed to the delta clone for subsequent upgrade in order to avoid engineering data loss and maintain data integrity.

As described in greater detail herein, delta clones may support the tracking and upgrade specifically for data objects changed (e.g., engineering data authored) during the background database upgrade of the production clone. Moreover, the delta clone may be implemented as a stripped version of the production database, with instance data removed to reduce database table sizes and upgrade complexities. As such, the delta clone may support a higher-speed execution of a database upgrade for a specific subset of data objects (namely, tracked data objects of a production database determined to have been created, updated/modified, or deleted while the database upgrade is executed on the production clone). Database upgrades to the delta clone may thus be performed with increased speed and efficiency, such that production environment availability and uptime is increased while simultaneously maintaining data integrity. Accordingly, the delta clone-based database upgrade features described herein may reduce downtime for complex database upgrades and increase the efficiency by which complex database upgrades are performed for database systems.

These and other database upgrade features and technical benefits are described in greater detail herein.

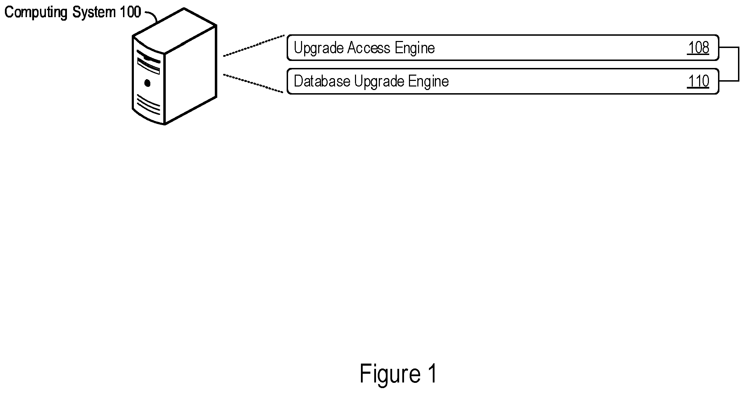

Figure 1 shows an example of a computing system 100 that supports delta clone-based database upgrades. The computing system 100 may take the form of a single or multiple computing devices such as application servers, compute nodes, desktop or laptop computers, smart phones or other mobile devices, tablet devices, embedded controllers, and more. In some implementations, the computing system 100 implements a PDM application with an underlying database that stores production data of the PDM application.

As an example implementation to support any combination of the delta clone-based database upgrade features described herein, the computing system 100 shown in Figure 1 includes an upgrade access engine 108 and a database upgrade engine 110. The computing system 100 may implement the engines 108 and 110 (including components thereof) in various ways, for example as hardware and programming. The programming for the engines 108 and 110 may take the form of processor-executable instructions stored on a non-transitory machine-readable storage medium and the hardware for the engines 108 and 110 may include a processor to execute those instructions. A processor may take the form of single processor or multiprocessor systems, and in some examples, the computing system 100 implements multiple engines using the same computing system features or hardware components (e.g., a common processor or a common storage medium).

In operation, the upgrade access engine 108 may access a database upgrade to perform for a production database. In operation, the database upgrade engine 110 may generate multiple clones of the production database, including a production clone of the production database that is a full copy of the production database at a given time and a delta clone that is a copy of the production database at the given time with instance data removed. The database upgrade engine 110 may perform the database upgrade on the production clone, track changes to the production database from the given time until the database upgrade of the production clone completes, and push the tracked changes to the delta clone. After the database upgrade on the production clone completes, the database upgrade engine 110 may perform the database upgrade on the delta clone, push upgraded data of the delta clone to the upgraded production clone, and set the upgraded production clone as an upgraded version of the production database.

These and other database upgrade features are described in greater detail next. Many of the database upgrade features herein are presented in the context of PDM or PLM systems, as illustrative examples. However, any of the described delta clone-based database upgrade features may be consistently relevant, applicable, and implemented for database upgrades of any type and for databases or computing systems of any type.

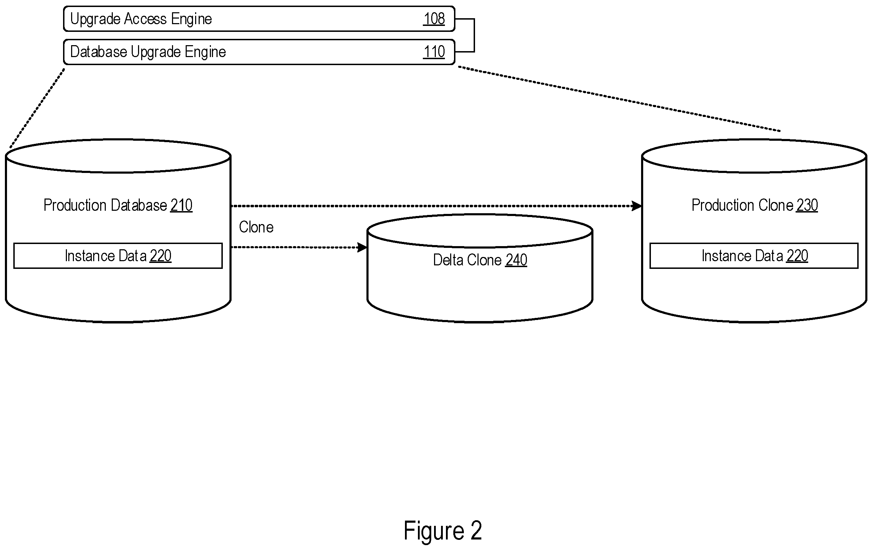

To support database upgrades through delta clones, a computing system may generate multiple clones of a given database to be upgraded, including generating a production clone and a delta clone. Example clone generation features according to the present disclosure are described in greater detail next with reference to Figure 2.

Figure 2 shows an example generation of database clones to support delta clone-based database upgrades. As a continuing example, a computing system is illustrated via the upgrade access engine 108 and the database upgrade engine 110. Other implementations are also contemplated herein. In some implementations, that upgrade access engine 108 and database upgrade engine 110 may be implemented as part of a PDM computing system that hosts a PDM application. Such a computing system may also implement or otherwise access a production database for the PDM application. As used herein, a production database may refer to any data storage entity that stores application data.

For PDM applications or other software applications, a production database may be implemented as part of a database system that stores production data accessible and updated through use of software applications. As one example, production databases may be implemented as or through a relational database management systems (RDBMS). As noted herein, production databases of modern software applications may be highly complex, configured with complex schema structures and intricate multi-tier data dependencies as necessary to support a wide range of application functionality. In the example of Figure 2, an example production database that a computing system may implement is shown as the production database 210, which stores instance data 220. The instance data 220 may include application data objects generated, modified, and used by PDM applications or other applications.

To support delta clone-based database upgrades, the upgrade access engine 108 may access a database upgrade to perform on the production database 210. Accessing of a database upgrade may refer to any mechanism by which the upgrade access engine 108 obtains instructions, code, procedures, or other logic through which to execute database upgrades. The upgrade access engine 108 may access database upgrades in different ways, which may vary based on how a given database upgrade is implemented. For instance, a database upgrade for the production database 210 may be implemented through scripts, procedures, code flows, batch files, or other forms of upgrade logic, in which case the upgrade access engine 108 may load, store, or otherwise access such upgrade logic. In some instances, the upgrade access engine 108 may access a database upgrade from a user input, which a system administrator, super user, or other control entity may input into a computing system to upgrade the production database 210. In yet other instances, an application server may push the database upgrade onto the production database 210, by which the upgrade access engine 108 may receive or otherwise obtain the database upgrade to perform for the production database 210.

To support delta clone-based database upgrades, the database upgrade engine 110 may generate clones of the production database 210. The database upgrade engine 110 may do so in order to perform database upgrades for the production database 210 in an indirect manner, e.g., by cloning the production database 210 and executing the database upgrade on a clone of the production database 210 instead of the production database 210 itself. By doing so, the database upgrade engine 110 may generate a database entity by which database upgrade processes may be performed as a background process while application authoring access to the production database 210 is maintained. As such, interruptions to data access and application downtime may be reduced (especially as database upgrade processes performed on production data may take many hours or multiple days to complete).

In the example shown in Figure 2, the database upgrade engine 110 generates multiple different clones of the production database 210, including the production clone 230 and the delta clone 240. Each are described in turn.

The database upgrade engine 110 may generate a production clone 230 as a full or complete copy of the production database 210. In doing so, the production clone 230 may store the entire contents of the production database 210. Accordingly, the production clone 230 shown in Figure 2 stores (at least) the instance data 220 also stored by the production database 210. The production clone 230 may mirror the state of the production database 210 at a given point in time. To illustrate, the database upgrade engine 110 may generate the production clone 230 by capturing a snapshot of the production database 210 at a given time, e.g., by executing a copy command of the entire production database 210 at the given time. As described in greater detail herein, the database upgrade engine 110 may perform the database upgrade for the production database 210, but do so by executing database upgrade logic on the production clone 230 instead of the production database 210.

The database upgrade engine 110 may also generate a delta clone 240 of the production database 210. The delta clone 240 may be generated by the database upgrade engine 110 as a stripped-down version of the production database 210 in that database upgrades can still be successfully executed on the delta clone 240, but without storing selected application data of the production database 210 (e.g., with the instance data 220 of the production database 210 pruned from the delta clone 240). In some implementations, the database upgrade engine 110 may generate the delta clone 240 by maintaining a schema definition, data class structure, and data indices in the delta clone 240 that is same as the production database 210 while also removing the instance data 220 of the production database 210 from the delta clone 240. The database upgrade engine 110 may thus generate the delta clone 240 by copying the production database 210 (e.g., at the same snapshot time as used to generate the production clone 230), and then subsequently pruning or removing application data from the copy.

Even though generated delta clones may be pruned of selected application data, the database upgrade engine 110 may maintain, in the delta clone 240, a consistent underlying database structure as the production database 210. For example, the database upgrade engine 110 may construct the delta clone 240 to have the same stable identities as the production clone 210, including class IDs, temporary tables, admin style object instances (users, groups, roles), schema details and structure, and the like. Delta clones generated by the database upgrade engine 110 may not simply be a wholly empty database with the same schema as a copied production clone. Instead, the database upgrade engine 110 may maintain the login data, custom user settings, data relationships and schema structures of the production database 210 in the delta clone 240, but with selected instances of application data removed from the delta clone 240.

Accordingly, the delta clone 240 may mirror the production database 210 in terms of schema definitions, classes, super classes, object definitions, inheritance models, data frameworks, and the like, but lack actual application data (which may be removed by the database upgrade engine 110). By removing object instances and other application data(e.g., the instance data 220), the database upgrade engine 110 may generate the delta clone 240 to be a fraction of the size of the production database 210, especially for production databases that store immense amounts of complex application data generated through continued use of PDM applications or other software applications.

Note that the instance data 220 removed by the database upgrade engine 110 need not include all of the instance data stored in the production database 210. Put another way, the database upgrade engine 110 may generate the delta clone 240 as a copy of the production database 210 with selected application instance data removed from the delta clone 240. The database upgrade engine 110 may maintain some instance data in the delta clone 240 for various reasons, including to ensure that a subsequent execution of database upgrade logic on the delta clone 240 can complete successfully.

In some implementations, the database upgrade engine 110 generates a delta clone 240 that maintains various functional aspects of the production database 210. For instance, the database upgrade engine 110 may maintain login functionality to the delta clone 240, which may include specific login credentials or user instance data that the database upgrade engine 110 may retain in the delta clone 240 (e.g., determine not to remove or prune from a copy of the production database 210). User-specific settings or custom database parameters may likewise be retained by the database upgrade engine 110.

As another example, the database upgrade engine 110 may keep project or license data in the delta clone 240. To illustrate, a PDM system may store product data in a production database that models a naval ship with millions of object instances and assembly objects that form the naval ship. In generating a delta clone of such a production database, the database upgrade engine 110 may retain the project and license data for the naval ship that allows a PDM application (and/or database upgrade logic) to load, interpret, or access the naval ship, while further removing the millions of PDM application object instances that actually form the naval ship.

By retaining such project, license, login, custom user data, or other determined instance data, the database upgrade engine 110 may ensure that the delta clone 240 can support application functionality required to perform database upgrades on production data. That is, upgrade logic may be executed in the context of supported application functionalities, and the database upgrade engine 110 may ensure that necessary data objects to support such application functionality is preserved in the delta clone 240, even though actual application object instances and other application data are removed by the database upgrade engine 110 in forming the delta clone 240.

To differentiate between instance data 220 that can be removed from a production database copy and necessary data objects to retain in the delta clone 240, the database upgrade engine 110 may identify, track, or catalog necessary database elements in the production database 210. The database upgrade engine 110 may do so on a per-table or per-data class basis, including by tracking operation of the production database 210 prior to database upgrade execution. In particular, the database upgrade engine 110 may determine essential (instances of) data classes, tables, and other database elements necessary to support application functionality (e.g., login, project loading, application operations required to perform database upgrades, etc.). In some implementations, the database upgrade engine 110 may execute a background process to track application usage, analyze application logs, or otherwise track application data accesses to determine particular classes, tables, or other database elements needed to support requisite application functionality. For example, the database upgrade engine 110 may insert internal hooks into the production database 210 or application logic in order to track class IDs or other indicators of affected instances during essential application processes, such as business model related schema reporting as well as database processes that would be executed during performance of a database upgrade.

Through such processes, the database upgrade engine 110 may generate a list of essential tables and classes. Essential tables and classes may refer to any delineated set of database elements required to execute a database upgrade successfully. Then, the database upgrade engine 110 may generate the delta clone 240 as a copy of the production database 210 that retains instance data of the essential tables and classes, and with other application data and object instances (e.g., the instance data 220) removed, pruned, or stripped from the copy in order to generate the delta clone 240. Put another way, the database upgrade engine 110 may keep the same class structure of the production database 210 (e.g., all classes), but remove the instance data of classes in the production database copy that are not included or identified as essential tables and classes (and thus remove tables of such non-essential classes in forming the delta clone 240).

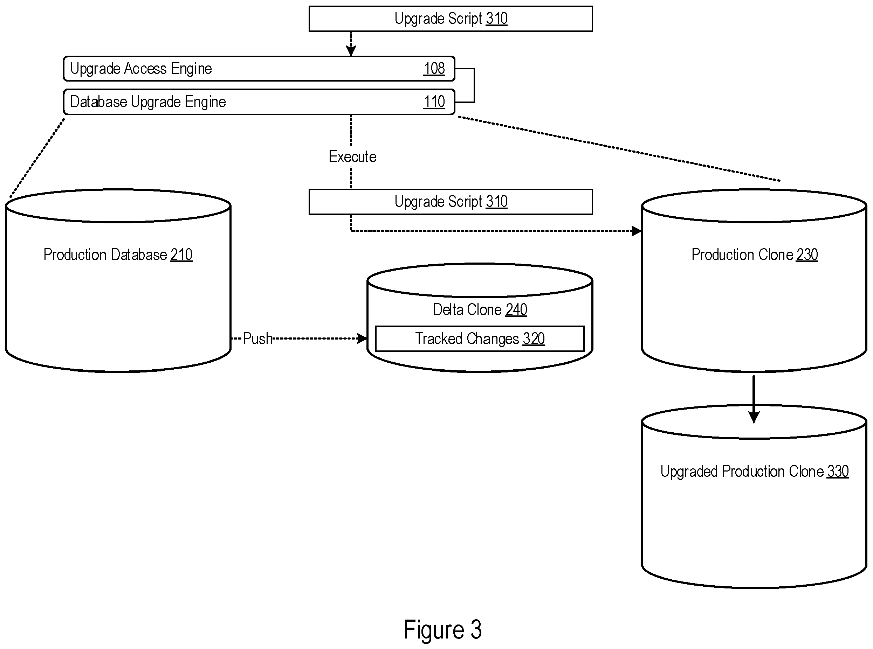

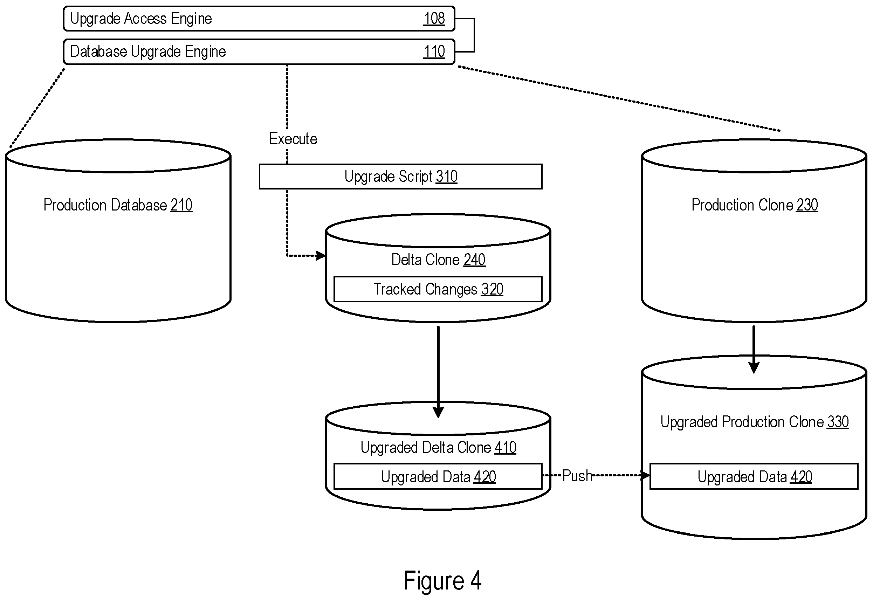

In any of the ways described herein, the database upgrade engine 110 may generate a production clone 230 and a delta clone 240 of a production database 210. Both the production clone 230 and the delta clone 240 may support execution of a database upgrade for the production database 210, and example database upgrade features are described next with reference to Figures 3 and 4.

Figure 3 shows an example database upgrade to a production clone and tracking of changes to a production database through a delta clone. In the example in Figure 3, the upgrade access engine 108 accesses a database upgrade to perform for a production database 210 in the form of an upgrade script 310. Then, the database upgrade engine 110 may perform the database upgrade for the production database 210 by executing the upgrade script 310 on the production clone 230. Since the production clone 230 may be generated as a complete copy of the production database 210 at a given time, execution of the upgrade script 310 on the production clone 230 may result in a full upgrade of application data of the production database 210 (stored at the given time). As the upgrade script 310 is executed on the production clone 230, the database upgrade engine 110 may maintain user and application access to the production database 210 during the database upgrade to the full set of production data.

Performing the database upgrade on the production clone 230 may take time, and upgrade windows for complex data systems can range from multiple hours to multiple days. During such upgrade windows, the database upgrade engine 110 may permit changes to the production database 210 while the database upgrade on the production clone 230 is being performed (e.g., by granting write access to the production database 210 during the upgrade window). During such an upgrade window however, any application changes to the production data stored in production database 210 will not be likewise made to the production clone 230, which may result in inconsistent data states between the production database 210 and the production clone 230. The database upgrade engine 110 may address such a data inconsistency by tracking changes to the production database 210 while the database upgrade on the production clone 230 is being performed.

The database upgrade engine 110 may track changes to the production database 210 to account for any differences between the production database 210 and the production clone 230 while the production clone 230 is being upgraded. Since the production clone 230 may capture the state of the production database 210 at a given time (e.g., at a time a snapshot is captured), the database upgrade engine 110 may track any changes to the production database 210 from this given time until the database upgrade to the production clone 230 completes.

The database upgrade engine 110 may track changes to the production database 210 as any insertions, modifications, or deletions to data instances in the production database 210. As such, the database upgrade engine 110 may track changes as a listing of any newly created, modified, or deleted data objects in the production database 210 (and in some implementations, further including a time stamp as to when such data objects are created, modified, or deleted). The database upgrade engine 110 may track such changes via a list, scratch table, or other data structure by which any changed data object instances are recorded as tracked changes.

Note that the database upgrade engine 110 may limit changes to the structure of the production database 210 during the database upgrade, even though data authoring of data instances in the production database 210 as permitted by the database upgrade engine 110. That is, the database upgrade engine 110 may limit, prevent, prohibit, or otherwise restrict schema changes during the database upgrade, and thus tracked changes by the database upgrade engine 110 may include changes to data objects/engineering data stored in the production database 210, but not structural changes to the database schema.

During or after completion of the database upgrade to the production clone 230, the database upgrade engine 110 may push tracked changes that occur in the production database 210 to the delta clone 240. Once the database upgrade engine 110 starts to push the tracked changes to the delta clone 240, the database update engine 110 may limit or restrict authoring access to the production clone 210 (in order to maintain data integrity and avoid data loss). In the example of Figure 3, the database upgrade engine 110 pushes (e.g., transfers or inserts) the tracked changes 320 to the delta clone 240, and the tracked changes 320 may include at least the data objects of the production database 210 that changed from a given time when the state of production database 210 is captured and cloned until the database upgrade performed on the production clone 230 completes. Pushing of data (e.g., tracked changes) from other database to another may be performed by the database upgrade engine 110 through any number of database linking technologies.

Note that the data upgrade engine 110 may identify the tracked changes 320 to push into the skeleton database 240 as more than just the specific data object instances that were identified as having changed during the database upgrade to the production clone 230. In some implementations, the data objects of a production database 210 may require additional helper objects necessary to interpret, load, access, or otherwise use such data objects. Additional helper objects may thus be required to perform a database upgrade on changed data objects pushed to the delta clone 240. The database upgrade engine 110 may identify such helper objects as necessary or part of the tracked changes 320 to push to the delta clone 240.

In such cases, the database upgrade engine 110 may track changes to the production database 210 by identifying data objects in the production database 210 modified while the database upgrade to the production clone 230 is being performed as well as determining helper objects in the production database 210 used to interpret the identified data objects. The helper objects may be part of an "island of data" necessary to interpret given production data, and the database upgrade engine 110 may track and identify such helper objects to include as part of tracked changes 320 to send to the delta clone 240. As such, the database upgrade engine 110 may push the tracked changes 320 to the delta clone 240 by pushing the identified data objects as well as the determined helper objects to the delta clone 240 (or put another way, by pushing the island of data associated with a given data objected tracked as having changed during the upgrade window to the production clone 230).

In some examples, the database upgrade engine 110 may continue to track changes to the production database 210 and push tracked changes 320 to the delta clone 240 until the database upgrade to the production clone 230 completes. As seen in Figure 3, completion of the database upgrade on the production clone 230 (e.g., via completed execution of the upgrade script 310, including data validation) may result in an upgraded production clone 330. At this point, the upgraded production clone 330 may include upgraded production data as of the given time at which a snapshot of the production database 210 was captured, but not yet include the changed data object instances stored in the delta clone 240. Upgrade and pushing of upgraded data in the delta clone 240 is described next with reference to Figure 4.

Figure 4 shows an example of a database upgrade to the delta clone 240 after a database upgrade to the production clone 230 completes. After completion of the database upgrade of the production clone 230, the delta clone 240 may store the tracked changes 320 pushed from the production database 210. At this point, the upgraded production clone 330 may store production data in the form of upgraded data object instances but the delta clone 240 may store changed production data in a non-upgraded form.

The database upgrade engine 110 may upgrade the changed data objects tracked and pushed to the delta clone 240 as part of the tracked changes 320. In doing so, the database upgrade engine 110 may perform the same database upgrade on the delta clone 240 that was performed on the production clone 230. For example, the database upgrade engine 110 may use (e.g., execute) the same upgrade script 310 to perform both the database upgrade on the production clone 230 and the database upgrade on the delta clone 240. This may be possible as the database upgrade engine 110 may generate the delta clone 240 and push the tracked changes 320 in a manner that supports the requisite data schema structure and application functionality as needed to execute the same upgrade logic on both a full copy of the production data stored in the production clone 230 and a stripped copy of the production database 210 as implemented through the delta clone 240.

By supporting generic upgrade logic capable of being performed on both the production clone 230 as well as the delta clone 240, the database upgrade engine 110 may increase the efficiency of database upgrades. Put another way, separate and tailored database upgrade logic need not be generated to support different or bifurcated upgrades to the full production data stored on the production clone 230 and the tracked data object instances as stored on the delta clone 240. Through the generation and selective pruning in forming the delta clone 240, the database upgrade engine 110 may support execution of a single upgrade flow (e.g., the upgrade script 310) on different data databases storing different data instances and data of differing quantities.

Since the database upgrade engine 110 may remove the instance data 220 during generation of the delta clone 240, the execution latency of the upgrade script 310 on the delta clone 240 may be reduced as compared to the fully copied production clone 230. In particular, the database upgrade performed on the delta clone 240 (with the tracked changes 320 pushed) may run with increased speed because instance tables will be empty except for the changed data objects tracked during the upgrade to the production clone 230 as well as the identified helper objects and islands of data. In some implementations, the database upgrade engine 110 may further trim selected logic from the database upgrade that do not affect any of the tracked changes 320 stored in the delta clone 240. In performing the database upgrade on the delta clone 240, the database upgrade engine 110 may upgrade the data object instances identified as changed, determined helper objects to the identified changed data objects, or combinations of both.

In Figure 4, completion of the database upgrade to the delta clone 240 results in the upgraded delta clone 410, which may store upgraded data 420. The upgraded data 420 may include the production data changed during the upgrade window to the production clone 230 (and, in some cases, determined helper objects) now upgraded through execution of the upgrade script 310. In one sense, the upgraded data 420 may represent a delta between the upgraded production clone 330 and the user/application changes that occurred to production data during the upgrade of the production clone 230.

To maintain data consistency and avoid data loss, the database upgrade engine 110 may then push the upgraded data 420 to the upgraded production clone 330, after which the upgraded production clone 330 may include an up-to-date state of production data that has undergone the database upgrade. The up-to-date state of production data in the upgraded production clone 330 may include any data object insertions, modifications, and deletions to the production data of the production database 210 that occurred during upgrade of the production clone 230, and in an upgraded form through execution of the database upgrade on the delta clone 240.

As the upgraded production clone 330 may store an up-to-date state of upgraded production data, the database upgrade engine 110 may set the upgraded production clone 330 as an upgraded version of the production database 210. For instance, the database upgrade engine 110 may point application logic to the upgraded production clone 330 (with the upgraded data 420 pushed in). That is, the upgraded production clone 330 may now be set as the production database for a given application, with a schema structure and production data that has been upgraded. Explained in another way, the database upgrade engine 110 may perform a database upgrade for a production database 210 and the output of the database upgrade may be the upgraded production clone 330, which may now store upgraded production data. At this point, the database upgrade to the production clone 210 may complete.

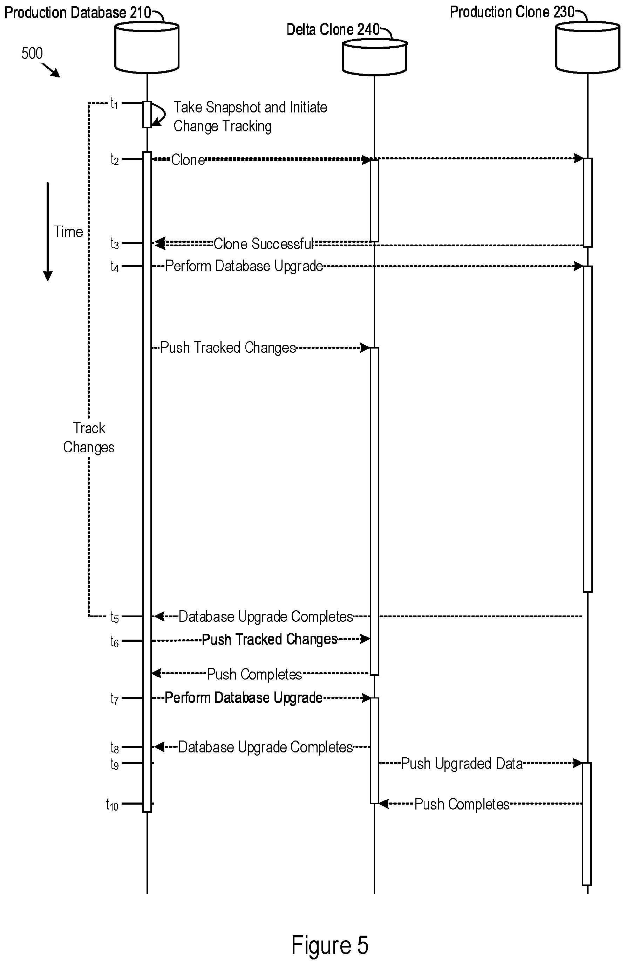

Figure 5 shows an example timeline 500 for a database upgrade of a production database 210 using a production clone 230 and a delta clone 240. The timeline 500 shown in Figure 5 provides example timings by which a database upgrade engine 110 may support and implement a delta clone-based database upgrade.

Prior to the starting of a given database upgrade, the database upgrade engine 110 may track essential classes and tables necessary to support application functionality and successfully perform the given database upgrade. Such tracking may be through insertion of application logic hooks and background tracking processes as described herein.

The database upgrade engine 110 may initiate performance of a database upgrade by taking a snapshot of the production database 210 for which the database upgrade will be performed. At a time t₁ in the timeline 500, the database upgrade engine 110 takes a snapshot of the production database 210. Also at time t₁, the database upgrade engine 110 may initiate the tracking of changes to the production database 210 to avoid data loss and ensure data consistency for the database upgrade. Note that the database upgrade engine 110 may continue to permit write access to the production database 210 at time t₁, which is why the database upgrade engine 110 may initiate the change tracking starting at time t₁ to ensure any such changes are captured and included in the database upgrade.

At a time t₂, the database upgrade engine 110 may generate multiple clones of the production database 210, including the production clone 230 as a complete copy of the production database 210 and the delta clone 240 as a copy of the production database 210 with instance data removed (as described herein). As also described herein, the database upgrade engine 110 may maintain the essential tables and classes, schema structures, and various other functionality-supporting data instances in the delta clone 240 necessary to successfully execute database upgrade logic on the delta clone 240. At a time t₃, the cloning of the production database 210 is successful. (Note that the database upgrade engine 110 need not generate the production clone 230 and the delta clone 240 at the same time, so long as generation of the delta clone 240 completes by the time the database upgrade on the production clone 230 completes.)

At a time t₄, the database upgrade engine 110 performs the database upgrade on the production clone 230. The upgrade window for such a database upgrade may depend on the complexity and quantity of the underlying production data being upgraded, and the database upgrade process could easily take multiple hours or days to upgrade and validate for modern application systems. During the upgrade window of the production clone 230, the database upgrade engine 110 may continue to track changes to the production database 210 made through user or application accesses, including the object instances that are created, modified, or deleted from the production data stored in the production database 210.

At a time t₅ in the timeline 500, the database upgrade on the production clone 230 completes. Upon completion of the database upgrade to the production clone 230 at time t₅, the database upgrade engine 110 may start restricting changes to the production database 210. For example, the database upgrade engine 110 may limit access to production database 210 as read-only starting at time t₅. Such access restriction may prevent any changes to further occur in the production data stored in the production database 210 until the database upgrade completes.

The database upgrade engine 110 may push such tracked changes (including determined helper objects) to the delta clone 240. The database upgrade engine 110 may do so during the database upgrade to the production clone 230, after the database upgrade to the production clone 230 completes, or a combination of both. In the example timeline 500 shown in Figure 5, the database upgrade engine 110 pushes tracked changes to the delta clone 240 at a time t₆ after the database upgrade to the production clone 230 completes. After the tracked changes are pushed to the delta clone 240, the database upgrade engine 110 may perform the database upgrade on the delta clone 240, shown in the timeline 500 as starting at time t₇. The database upgrade engine 110 may restrict changes to the production database 210 while the database upgrade on the delta clone 240 is being performed.

At a time t₈, the database upgrade on the delta clone 240 completes. After completion of the database upgrade to the delta clone 240 at time t₈, the database upgrade engine 110 may push the upgraded data stored in the upgraded delta clone to the production clone 230 (upgraded), doing so at a time t₉ in the timeline 500. At a time t₁₀, pushing of the upgraded data from the upgraded delta clone to the upgraded production clone completes, after which the database upgrade engine 110 may set the upgraded production clone as an upgraded version of the production database 210. At such a time, the database upgrade for the production database 210 completes. As such, the database upgrade engine 110 may again permit write access to the production data, now stored as upgraded production data in the upgraded production clone.

In the example timeline 500 in Figure 5, the database upgrade engine 110 may restrict access to production data from time t₅ to time t₁₀ (e.g., only allowing read-only access to the production database), which may be viewed as the "downtime" during the database upgrade process. Such a downtime may be (at times, significantly) less than the upgrade window from time t₄ to t₅ needed to perform the database upgrade on the production clone 230, especially as the delta clone 240 may include only the tracked changes that occurred during the upgrade window and not the entirety of the production data as cloned into the production clone 230. Thus, generation and use of the delta clone 240 may increase production data availability, ensure data consistency, and provide database upgrade efficiencies as compared conventional database upgrade techniques.

Many of the examples presented herein are described with a single skeleton database. The present disclosure is not so limited. In some implementations, the database upgrade engine 110 may utilize multiple delta clones in combination to further reduce the production data downtime for database upgrades. For example, the database upgrade engine 110 may utilize a second delta clone to store tracked changes identified while a first delta clone is being upgraded. During the upgrade window for the first delta clone, the database upgrade engine 110 may continue to permit changes to production data stored in the production database 210, and instead restrict write access after the database upgrade to the first delta clone completes. Then, the database upgrade engine 110 may perform the database upgrade on the second delta clone (e.g., in parallel with pushing the upgraded data in the first skeleton cone to the upgraded production database), and limit changes to the production data during this upgrade window to the second database upgrade window. In a consistent matter, the database upgrade engine 110 may iterate through third, fourth, fifth (or more) skeleton databases to further reduce the downtime of production data availability for database upgrade processes.

While many delta clone-based database upgrade features have been described herein through illustrative examples presented through various figures, the upgrade access engine 108 and the database upgrade engine 110 may implement any combination of the database upgrade features described herein.

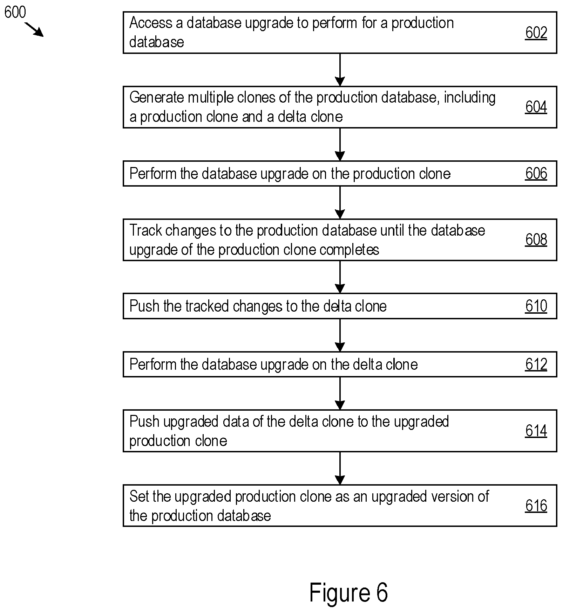

Figure 6 shows an example of logic 600 that a system may implement to support delta clone-based database upgrades. For example, the computing system 100 may implement the logic 600 as hardware, executable instructions stored on a machine-readable medium, or as a combination of both. The computing system 100 may implement the logic 600 via the upgrade access engine 108 and the database upgrade engine 110, through which the computing system 100 may perform or execute the logic 600 as a method to support delta clone-based database upgrades. The following description of the logic 600 is provided using the upgrade access engine 108 and the database upgrade engine 110 as examples. However, various other implementation options by systems are possible.

In implementing the logic 600, the upgrade access engine 108 may access a database upgrade to perform for a production database (602). In implementing the logic 600, the database upgrade engine 110 may generate multiple clones of the production database, including a production clone and a delta clone (604). The production database may be a full copy of the production database at a given time and a delta clone may be a copy of the production database at the given time with instance data removed. In implementing the logic 600, the database upgrade engine 110 may further perform the database upgrade on the production clone (606), track changes to the production database from the given time until the database upgrade of the production clone completes (608), and push the tracked changes to the delta clone (610). After the database upgrade on the production clone completes, the database upgrade engine 110 may perform the database upgrade on the delta clone (612), push upgraded data of the delta clone to the upgraded production clone (614), and set the upgraded production clone as an upgraded version of the production database (616).

The logic 600 shown in Figure 6 provides an illustrative example by which a computing system 100 may support delta clone-based database upgrades. Additional or alternative steps in the logic 600 are contemplated herein, including according to any of the various features described herein for the upgrade access engine 108, the database upgrade engine 110, or any combinations thereof.

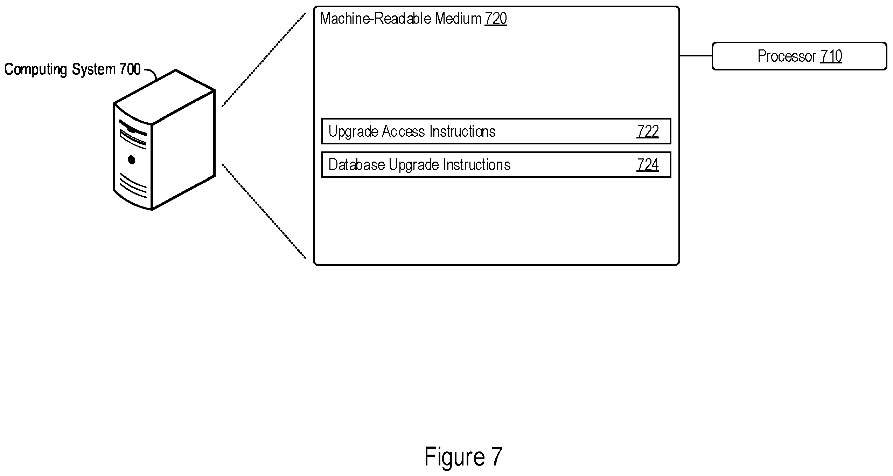

Figure 7 shows an example of a computing system 700 that supports delta clone-based database upgrades. The computing system 700 may include a processor 710, which may take the form of a single or multiple processors. The processor(s) 710 may include a central processing unit (CPU), microprocessor, or any hardware device suitable for executing instructions stored on a machine-readable medium. The system 700 may include a machine-readable medium 720. The machine-readable medium 720 may take the form of any non-transitory electronic, magnetic, optical, or other physical storage device that stores executable instructions, such as the upgrade access instructions 722 and the database upgrade instructions 724 shown in Figure 7. As such, the machine-readable medium 720 may be, for example, Random Access Memory (RAM) such as a dynamic RAM (DRAM), flash memory, spin-transfer torque memory, an Electrically-Erasable Programmable Read-Only Memory (EEPROM), a storage drive, an optical disk, and the like.

The computing system 700 may execute instructions stored on the machine-readable medium 720 through the processor 710. Executing the instructions (e.g., the upgrade access instructions 722 and/or the database upgrade instructions 724) may cause the computing system 700 to perform any of the database upgrade features described herein, including according to any of the features of the upgrade access engine 108, the database upgrade engine 110, or combinations of both.

For example, execution of the upgrade access instructions 722 by the processor 710 may cause the computing system 700 to access a database upgrade to perform for a production database. Execution of the database upgrade instructions 724 by the processor 710 may cause the computing system 700 to generate multiple clones of the production database, including a production clone of the production database that is a full copy of the production database at a given time and a delta clone that is a copy of the production database at the given time with instance data removed.

Execution of the database upgrade instructions 724 by the processor 710 may also cause the computing system 700 to perform the database upgrade on the production clone, track changes to the production database from the given time until the database upgrade of the production clone completes, and push the tracked changes to the delta clone. Execution of the database upgrade instructions 724 by the processor 710 may further cause the computing system 700 to, after the database upgrade on the production clone completes, perform the database upgrade on the delta clone, push upgraded data of the delta clone to the upgraded production clone, and set the upgraded production clone as an upgraded version of the production database.

Any additional or alternative database upgrade features as described herein may be implemented via the upgrade access instructions 722, database upgrade instructions 724, or a combination of both.

The systems, methods, devices, and logic described above, including the upgrade access engine 108 and the database upgrade engine 110, may be implemented in many different ways in many different combinations of hardware, logic, circuitry, and executable instructions stored on a machine-readable medium. For example, the upgrade access engine 108, the database upgrade engine 110, or combinations thereof, may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. A product, such as a computer program product, may include a storage medium and machine-readable instructions stored on the medium, which when executed in an endpoint, computer system, or other device, cause the device to perform operations according to any of the description above, including according to any features of the upgrade access engine 108, the database upgrade engine 110, or combinations thereof.

The processing capability of the systems, devices, and engines described herein, including the upgrade access engine 108 and the database upgrade engine 110, may be distributed among multiple system components, such as among multiple processors and memories, optionally including multiple distributed processing systems or cloud/network elements. Parameters, databases, and other data structures may be separately stored and managed, may be incorporated into a single memory or database, may be logically and physically organized in many different ways, and may be implemented in many ways, including data structures such as linked lists, hash tables, or implicit storage mechanisms. Programs may be parts (e.g., subroutines) of a single program, separate programs, distributed across several memories and processors, or implemented in many different ways, such as in a library (e.g., a shared library).

While various examples have been described above, many more implementations are possible.

## Claims

1. A method comprising:
by a computing system (100, 700):
accessing (602) a database upgrade to perform for a production database (210);
generating (604) multiple clones of the production database (210), including a production clone (230) of the production database that is a full copy of the production database (210) at a given time and a delta clone (240) that is a copy of the production database at the given time with instance data (220) removed;
performing (606) the database upgrade on the production clone (230);
tracking (608) changes to the production database (210) from the given time until the database upgrade of the production clone completes;
pushing (610) the tracked changes (320) to the delta clone (240), and
after the database upgrade on the production clone completes:
performing (612) the database upgrade on the delta clone (240);
pushing (614) upgraded data (420) of the delta clone to the upgraded production clone (330); and
setting (616) the upgraded production clone (330) as an upgraded version of the production database (210).

2. The method of claim 1, comprising generating the delta clone (240), including by:
maintaining a schema definition, data class structure, and data indices in the delta clone (240) that is same as the production database (210); and
removing the instance data (220) of the production database (210) from the delta clone (240).

3. The method of claim 1 or 2, wherein the database upgrade is performed through an upgrade script (310); and
wherein database upgrade on the production clone (230) and the database upgrade on the delta clone (240) are both performed using the upgrade script (310).

4. The method of any of claims 1-3, comprising pushing the tracked changes (320) to the delta clone (240) while the database upgrade to the production clone is being performed, after the database upgrade to the production clone completes, or a combination of both.

5. The method of any of claims 1-4, further comprising restricting changes to the production database (210) while the database upgrade on the delta clone is being performed.

6. The method of any of claims 1-5, further comprising permitting changes to the production database (210) while the database upgrade on the production clone is being performed.

7. The method of any of claims 1-6, wherein tracking changes to the production database comprises:
identifying data objects in the production database modified while the database upgrade to the production clone is being performed; and
determining helper objects in the production database used to interpret the identified data objects, and
wherein pushing the tracked changes (320) to the delta clone comprises pushing the identified data objects as well as the determined helper objects to the delta clone (240).

8. A system (100) comprising:
an upgrade access engine (108) configured to access a database upgrade to perform for a production database (210); and
a database upgrade engine (110) configured to:
generate multiple clones of the production database (210), including a production clone (230) of the production database that is a full copy of the production database (210) at a given time and a delta clone (240) that is a copy of the production database at the given time with instance data (220) removed;
perform the database upgrade on the production clone (230);
track changes to the production database (210) from the given time until the database upgrade of the production clone completes;
push the tracked changes (320) to the delta clone (240), and
after the database upgrade on the production clone completes:
perform the database upgrade on the delta clone (240);
push upgraded data (420) of the delta clone to the upgraded production clone (330); and
set the upgraded production clone (330) as an upgraded version of the production database (210).

9. The system (100) of claim 8, wherein the database upgrade engine (110) is configured to generate the delta clone (240), including by:
maintaining a schema definition, data class structure, and data indices in the delta clone (240) that is same as the production database (210); and
removing the instance data (220) of the production database (210) from the delta clone (240).

10. The system (100) of claim 8 or 9, wherein the database upgrade engine (110) is configured to perform both the database upgrade on the production clone (230) and the database upgrade on the delta clone (240) using a same upgrade script (310).

11. The system (100) of any of claims 8-10, wherein the database upgrade engine (110) is configured to push the tracked changes (320) to the delta clone (240) while the database upgrade to the production clone is being performed, after the database upgrade to the production clone completes, or a combination of both.

12. The system (100) of any of claims 8-11, wherein the database upgrade engine (110) is further configured to restrict changes to the production database (210) while the database upgrade on the delta clone is being performed.

13. The system (100) of any of claims 8-12, wherein the database upgrade engine (110) is further configured to permit changes to the production database (210) while the database upgrade on the production clone is being performed.

14. The system (100) of any of claims 8-13, wherein the database upgrade engine (110) is configured to track the changes to the production database by:
identifying data objects in the production database modified while the database upgrade to the production clone is being performed; and
determining helper objects in the production database used to interpret the identified data objects, and
wherein pushing the tracked changes (320) to the delta clone comprises pushing the identified data objects as well as the determined helper objects to the delta clone (240).

15. A non-transitory machine-readable medium (720) comprising instructions (722, 724) that, when executed by a processor (710), cause a computing system (700) to perform a method according to any of claims 1-7.

## Patentansprüche

1. Verfahren, das Folgendes umfasst:
durch ein Rechensystem (100, 700):
Zugreifen (602) auf eine für eine Produktionsdatenbank (210) durchzuführende Datenbankaktualisierung,
Erzeugen (604) mehrerer Klone der Produktionsdatenbank (210) einschließlich eines Produktionsklons (230) der Produktionsdatenbank, bei dem es sich um eine vollständige Kopie der Produktionsdatenbank (210) zu einem bestimmten Zeitpunkt handelt, und eines Delta-Klons (240), bei dem es sich um eine Kopie der Produktionsdatenbank zu dem bestimmten Zeitpunkt handelt, aus der Instanzdaten (220) entfernt wurden,
Durchführen (606) der Datenbankaktualisierung an dem Produktionsklon (230),
Nachverfolgen (608) von Änderungen an der Produktionsdatenbank (210) ab dem bestimmten Zeitpunkt, bis die Datenbankaktualisierung des Produktionsklons abgeschlossen ist,
Ablegen (610) der nachverfolgten Änderungen (320) im Delta-Klon (240) und,
wenn die Datenbankaktualisierung an dem Produktionsklon abgeschlossen ist:
Durchführen (612) der Datenbankaktualisierung an dem Delta-Klon (240),
Ablegen (614) von aktualisierten Daten (420) des Delta-Klons im aktualisierten Produktionsklon (330) und
Einstellen (616) des aktualisierten Produktionsklons (330) als aktualisierte Version der Produktionsdatenbank (210) .

2. Verfahren nach Anspruch 1, das das Erzeugen des Delta-Klons (240) umfasst, unter anderem durch:
Führen einer Schemadefinition, einer Datenklassenstruktur und von Datenindizes in dem Delta-Klon (240), der der Produktionsdatenbank (210) entspricht, und
Entfernen der Instanzdaten (220) der Produktionsdatenbank (210) aus dem Delta-Klon (240).

3. Verfahren nach Anspruch 1 oder 2, wobei die Datenbankaktualisierung über ein Aktualisierungsskript (310) durchgeführt wird und
wobei sowohl die Datenbankaktualisierung an dem Produktionsklon (230) als auch die Datenbankaktualisierung an dem Delta-Klon (240) unter Verwendung des Aktualisierungsskripts (310) durchgeführt wird.

4. Verfahren nach einem der Ansprüche 1-3, das das Ablegen der nachverfolgten Änderungen (320) im Delta-Klon (240) umfasst, welches beim Durchführen der Datenbankaktualisierung am Produktionsklon, nach Abschluss der Datenbankaktualisierung am Produktionsklon oder bei einer Kombination aus beidem erfolgt.

5. Verfahren nach einem der Ansprüche 1-4, das ferner das Einschränken von Änderungen an der Produktionsdatenbank (210) umfasst, während die Datenbankaktualisierung am Delta-Klon durchgeführt wird.

6. Verfahren nach einem der Ansprüche 1-5, das ferner das Zulassen von Änderungen an der Produktionsdatenbank (210) umfasst, während die Datenbankaktualisierung am Produktionsklon durchgeführt wird.

7. Verfahren nach einem der Ansprüche 1-6, wobei das Nachverfolgen von Änderungen an der Produktionsdatenbank Folgendes umfasst:
Identifizieren von Datenobjekten in der Produktionsdatenbank, die beim Durchführen der Datenbankaktualisierung am Produktionsklon verändert werden, und
Festlegen von Hilfsobjekten in der Produktionsdatenbank, die zum Interpretieren der identifizierten Datenobjekte benutzt werden, und
wobei das Ablegen der nachverfolgten Änderungen (320) im Delta-Klon das Ablegen der identifizierten Datenobjekte sowie der festgelegten Hilfsobjekte im Delta-Klon (240) umfasst.

8. System (100), das Folgendes umfasst:
eine Aktualisierungszugriffs-Engine (108), die so konfiguriert ist, dass sie auf eine für eine Produktionsdatenbank (210) durchzuführende Datenbankaktualisierung zugreifen kann, und
eine Datenbankaktualisierungs-Engine (110), die so konfiguriert ist, dass sie:
mehrere Klone der Produktionsdatenbank (210) einschließlich eines Produktionsklons (230) der Produktionsdatenbank, bei dem es sich um eine vollständige Kopie der Produktionsdatenbank (210) zu einem bestimmten Zeitpunkt handelt, und eines Delta-Klons (240), bei dem es sich um eine Kopie der Produktionsdatenbank zu dem bestimmten Zeitpunkt handelt, aus der Instanzdaten (220) entfernt wurden, erzeugt,
die Datenbankaktualisierung an dem Produktionsklon (230) durchführt,
Änderungen an der Produktionsdatenbank (210) ab dem bestimmten Zeitpunkt nachverfolgt, bis die Datenbankaktualisierung des Produktionsklons abgeschlossen ist,
die nachverfolgten Änderungen (320) im Delta-Klon (240) ablegt und,
wenn die Datenbankaktualisierung an dem Produktionsklon abgeschlossen ist:
die Datenbankaktualisierung an dem Delta-Klon (240) durchführt,
aktualisierte Daten (420) des Delta-Klons im aktualisierten Produktionsklon (330) ablegt und
den aktualisierten Produktionsklon (330) als aktualisierte Version der Produktionsdatenbank (210) einstellt.

9. System (100) nach Anspruch 8, wobei die Datenbankaktualisierungs-Engine (110) so konfiguriert ist, dass sie den Delta-Klon (240) erzeugt, unter anderem durch:
Führen einer Schemadefinition, einer Datenklassenstruktur und von Datenindizes in dem Delta-Klon (240), der der Produktionsdatenbank (210) entspricht, und
Entfernen der Instanzdaten (220) der Produktionsdatenbank (210) aus dem Delta-Klon (240).

10. System (100) nach Anspruch 8 oder 9, wobei die Datenbankaktualisierungs-Engine (110) so konfiguriert ist, dass sie sowohl die Datenbankaktualisierung an dem Produktionsklon (230) als auch die Datenbankaktualisierung an dem Delta-Klon (240) unter Verwendung des gleichen Aktualisierungsskripts (310) durchführt.

11. System (100) nach einem der Ansprüche 8-10, wobei die Datenbankaktualisierungs-Engine (110) so konfiguriert ist, dass sie, während die Datenbankaktualisierung am Produktionsklon durchgeführt wird, nach Abschluss der Datenbankaktualisierung am Produktionsklon oder bei einer Kombination aus beidem die nachverfolgten Änderungen (320) im Delta-Klon (240) ablegt.

12. System (100) nach einem der Ansprüche 8-11, wobei die Datenbankaktualisierungs-Engine (110) ferner so konfiguriert ist, dass sie Änderungen an der Produktionsdatenbank (210) einschränkt, während die Datenbankaktualisierung am Delta-Klon durchgeführt wird.

13. System (100) nach einem der Ansprüche 8-12, wobei die Datenbankaktualisierungs-Engine (110) ferner so konfiguriert ist, dass sie Änderungen an der Produktionsdatenbank (210) zulässt, während die Datenbankaktualisierung am Produktionsklon durchgeführt wird.

14. System (100) nach einem der Ansprüche 8-13, wobei die Datenbankaktualisierungs-Engine (110) so konfiguriert ist, dass sie die Änderungen an der Produktionsdatenbank nachverfolgt, indem sie:
Datenobjekte in der Produktionsdatenbank identifiziert, die beim Durchführen der Datenbankaktualisierung am Produktionsklon verändert werden, und
Hilfsobjekte in der Produktionsdatenbank festlegt, die zum Interpretieren der identifizierten Datenobjekte benutzt werden, und
wobei das Ablegen der nachverfolgten Änderungen (320) im Delta-Klon das Ablegen der identifizierten Datenobjekte sowie der festgelegten Hilfsobjekte im Delta-Klon (240) umfasst.

15. Nichtflüchtiges, maschinenlesbares Medium (720), das Anweisungen (722, 724) umfasst, die, wenn sie von einem Prozessor (710) ausgeführt werden, ein Rechensystem (700) dazu veranlassen, ein Verfahren nach einem der Ansprüche 1-7 durchzuführen.

## Revendications

1. Procédé comprenant :
par un système informatique (100, 700) :
l'accès (602) à une mise à niveau de base de données destinée à la réalisation d'une base de données de production (210),
la génération (604) d'une pluralité de clones de la base de données de production (210), comprenant un clone de production (230) de la base de données de production qui est une copie complète de la base de données de production (210) à un instant donné et un clone delta (240) qui est une copie de la base de données de production à l'instant donné dont les données d'instance (220) ont été retirées,
l'exécution (606) de la mise à niveau de base de données sur le clone de production (230),
le suivi (608) de modifications apportées à la base de données de production (210) à partir de l'instant donné jusqu'à l'achèvement de la mise à niveau de base de données du clone de production,
la poussée (610) des modifications suivies (320) vers le clone delta (240), et
après l'achèvement de la mise à niveau de base de données sur le clone de production :
l'exécution (612) de la mise à niveau de base de données sur le clone delta (240),
la poussée (614) de données mises à niveau (420) du clone delta vers le clone de production mis à niveau (330), et
la définition (616) du clone de production mis à niveau (330) en tant que version mise à niveau de la base de données de production (210).

2. Procédé selon la revendication 1, comprenant la génération du clone delta (240), y compris par :
l'entretien d'une définition schématique, d'une structure de classe de données et d'indices de données dans le clone delta (240) qui sont les mêmes que dans la base de données de production (210), et
la suppression des données d'instance (220) de la base de données de production (210) du clone delta (240).

3. Procédé selon la revendication 1 ou 2, dans lequel la mise à niveau de base de données est exécutée par l'intermédiaire d'un script de mise à niveau (310), et
dans lequel la mise à niveau de base de données sur le clone de production (230) et la mise à niveau de base de données sur le clone delta (240) sont toutes les deux exécutées au moyen du script de mise à niveau (310).

4. Procédé selon l'une quelconque des revendications 1 à 3, comprenant la poussée des modifications suivies (320) vers le clone delta (240) pendant l'exécution de la mise à niveau de base de données vers le clone de production, après l'achèvement de la mise à niveau de base de données vers le clone de production, ou une combinaison de ces deux opérations.

5. Procédé selon l'une quelconque des revendications 1 à 4, comprenant en outre la restriction de modifications apportées à la base de données de production (210) pendant l'exécution de la mise à niveau de base de données sur le clone delta.

6. Procédé selon l'une quelconque des revendications 1 à 5, comprenant en outre l'autorisation de modifications apportées à la base de données de production (210) pendant l'exécution de la mise à niveau de base de données sur le clone de production.

7. Procédé selon l'une quelconque des revendications 1 à 6, dans lequel le suivi de modifications apportées à la base de données de production comprend :
l'identification d'objets de données dans la base de données de production modifiés pendant l'exécution de la mise à niveau de base de données vers le clone de production, et
la détermination d'objets d'assistance dans la base de données de production utilisés pour interpréter les objets de données identifiés, et
dans lequel la poussée des modifications suivies (320) vers le clone delta comprend la poussée des objets de données identifiés ainsi que des objets d'assistance déterminés vers le clone delta (240).

8. Système (100) comprenant :
un moteur d'accès à des mises à niveau (108) configuré de façon à accéder à une mise à niveau de base de données destinée à la réalisation d'une base de données de production (210), et
un moteur de mise à niveau de base de données (110) configuré de façon à :
générer une pluralité de clones de la base de données de production (210), comprenant un clone de production (230) de la base de données de production qui est une copie complète de la base de données de production (210) à un instant donné et un clone delta (240) qui est une copie de la base de données de production à l'instant donné dont les données d'instance (220) ont été retirées,
exécuter la mise à niveau de base de données sur le clone de production (230),
suivre des modifications apportées à la base de données de production (210) à partir de l'instant donné jusqu'à l'achèvement de la mise à niveau de base de données du clone de production,
pousser les modifications suivies (320) vers le clone delta (240), et
après l'achèvement de la mise à niveau de base de données sur le clone de production :
exécuter la mise à niveau de base de données sur le clone delta (240),
pousser les données mises à niveau (420) du clone delta vers le clone de production mis à niveau (330), et
définir le clone de production mis à niveau (330) en tant que version mise à niveau de la base de données de production (210).

9. Système (100) selon la revendication 8, dans lequel le moteur de mise à niveau de base de données (110) est configuré de façon à générer le clone delta (240), y compris par :
l'entretien d'une définition schématique, d'une structure de classe de données et d'indices de données dans le clone delta (240) qui sont les mêmes que dans la base de données de production (210), et
la suppression des données d'instance (220) de la base de données de production (210) du clone delta (240).

10. Système (100) selon la revendication 8 ou 9, dans lequel le moteur de mise à niveau de base de données (110) est configuré de façon à exécuter à la fois la mise à niveau de base de données sur le clone de production (230) et la mise à niveau de base de données sur le clone delta (240) au moyen d'un même script de mise à niveau (310).

11. Système (100) selon l'une quelconque des revendications 8 à 10, dans lequel le moteur de mise à niveau de base de données (110) est configuré de façon à pousser les modifications suivies (320) vers le clone delta (240) pendant l'exécution de la mise à niveau de base de données vers le clone de production, après l'achèvement de la mise à niveau de base de données vers le clone de production, ou une combinaison de ces deux opérations.

12. Système (100) selon l'une quelconque des revendications 8 à 11, dans lequel le moteur de mise à niveau de base de données (110) est configuré en outre de façon à restreindre des modifications apportées à la base de données de production (210) pendant l'exécution de la mise à niveau de base de données sur le clone delta.

13. Système (100) selon l'une quelconque des revendications 8 à 12, dans lequel le moteur de mise à niveau de base de données (110) est configuré en outre de façon à autoriser des modifications apportées à la base de données de production (210) pendant l'exécution de la mise à niveau de base de données sur le clone de production.

14. Système (100) selon l'une quelconque des revendications 8 à 13, dans lequel le moteur de mise à niveau de base de données (110) est configuré de façon à suivre les modifications apportées à la base de données de production par :
l'identification d'objets de données dans la base de données de production modifiés pendant l'exécution de la mise à niveau de base de données vers le clone de production, et
la détermination d'objets d'assistance dans la base de données de production utilisés pour interpréter les objets de données identifiés, et
dans lequel la poussée des modifications suivies (320) vers le clone delta comprend la poussée des objets de données identifiés ainsi que des objets d'assistance déterminés vers le clone delta (240).

15. Support lisible par ordinateur non transitoire (720) comprenant des instructions (722, 724) qui, lorsqu'elles sont exécutées par un processeur (710), amènent un système informatique (700) à exécuter un procédé selon l'une quelconque des revendications 1 à 7.
